Europäisches Patentamt

European Patent Office

Office européen des brevets

(19)

(11) **EP 0 290 342 B1**

(12) **FASCICULE DE BREVET EUROPEEN**

(45) Date de publication et mention
de la délivrance du brevet:
**08.04.1998 Bulletin 1998/15**

(51) Int Cl.⁶: **C08L 77/12**, C08L 77/06

(21) Numéro de dépôt: **88401084.4**

(22) Date de dépôt: **04.05.1988**

(54) **Utilisation de compositions thermoplastiques en poudre à base de polyamide ou de polyétheresteramide pour le revêtement de substrats métalliques, compositions thermoplastiques à base de polyamides et leur procécé de préparation**

Verwendung von thermoplastischen Zusammensetzungen in Pulverform auf der Basis von Polyamiden oder Polyetheresteramiden zum Überziehen metallischer Substrate, thermoplastiche Zusammensetzungen in Pulverform auf der Basis von Polyamiden und deren Herstellungsverfahren

Use of thermoplastic compositions in powder form on the basis of polyamides or polyetheresteramides for coating of metallic substrats, thermoplastic compositions in powder form on the basis of polyamides and process for their preparation

(84) Etats contractants désignés:
**AT BE CH DE ES FR GB GR IT LI LU NL SE**

(30) Priorité: **07.05.1987 GB 8710748**

(43) Date de publication de la demande:
**09.11.1988 Bulletin 1988/45**

(73) Titulaire: **ELF ATOCHEM S.A.**
**92800 Puteaux (FR)**

(72) Inventeurs:
• **Merval, Jean-Paul**
**F-27800 Brionne (FR)**
• **Peschard, Jean-Yves**
**F-27470 Serquigny (FR)**

• **Rennie, Sephen**
**London W3 (GB)**

(56) Documents cités:
**EP-A- 0 007 623       EP-A- 0 195 377**
**EP-A- 0 212 085       DE-A- 2 358 287**

• **PATENT ABSTRACTS OF JAPAN, vol. 7, no. 289 (C-202)(1434), 23 décembre 1983; JP-A-58 168 656 (TORAY) 5 Octobre 1983**
• **H. Kittel, Lehrbuch der Lacke und Beschichtungen, Verlag W.A. Colomb Berlin 1971-6, Bd. I, Tl.1, S. 385-386,Bd. I, Tl. 2, S. 503-512, Bd. III, S. 138-183.**
• **P. Swaraj, Surface Coatings: Science and Technology, John Wiley and Sons, 1985, pp 660-670**

## Description

La présente invention concerne l'utilisation de compositions thermoplastiques en poudre à base de polyamide et/ou de polyétheresteramide, pour le revêtement de substrats métalliques sans qu'un primaire d'adhérence soit nécessaire.

Les polyamides sont couramment utilisés pour le revêtement des substrats métalliques, en raison notamment de leurs bonnes propriétés mécaniques telles que résistance à l'abrasion, au choc, leur inertie chimique vis-à-vis de nombreux produits tels que les hydrocarbures, les bases, les acides minéraux.

Mais il est connu que l'adhérence des polyamides sur les métaux est insuffisante par suite d'une mauvaise mouillabilité à l'état fondu des polyamides qui ne leur permet pas de bien pénétrer dans les rugosités et interstices du métal afin d'acquérir une adhérence d'ordre mécanique. D'autre part, lorsqu'on réalise un dépôt régulier de poudre de polyamide sur toute une surface métallique et que l'on porte ce dépôt à la fusion à la température appropriée, le film de polyamide fondu se rétracte et se rassemble en gouttelettes qui peuvent tomber du support métallique.

Pour surmonter ce défaut, on enduit le support métallique d'une sous-couche, appelée primaire d'adhérence, destinée à assurer l'accrochage et l'ancrage mécanique de la poudre de polyamide. En général le primaire d'adhérence que l'on utilise est à base de résines thermodurcissables et il est appliqué sous forme de poudre ou en solution ou en suspension dans des solvants organiques.

Il faut donc prévoir des installations supplémentaires pour l'élimination éventuelle des solvants et pour la cuisson du primaire avant l'enduction du substrat ainsi revêtu avec la poudre de polyamide. De plus, la cuisson et/ou le séchage du primaire augmentent de façon non négligeable la durée des opérations de revêtement, et donc leur coût.

Dans le brevet français n° 72 41484, on a proposé des compositions en poudre à base de polyamide contenant des phénols bloqués et ne nécessitant pas l'utilisation de primaire d'adhérence.

Cependant, les conditions de mise en oeuvre sont délicates et ne permettent pas d'obtenir des résultats d'adhérence très performants, bien qu'améliorés.

Lehrbuch der Lacke und Beschichtungen de H. Kittel, Verlag W.A Colomb, Vol. I, partie 1, p. 385 et Vol. III, p. 506 enseigne que les résines toluène-sulfonamide peuvent être utilisées comme plastifiant des polyamides.

EP 212.085 décrit des mélanges à base de polyamide comprenant entre 2 et 3 % en poids par rapport au polyamide d'un plastifiant insoluble dans l'eau, tel que notamment une résine de condensation de formaldéhyde et de toluène sulfonamide et entre 5 et 100 % en poids par rapport au polyamide d'un copolymère d'a-oléfine et d'acide carboxylique insaturé. Les composants sous forme de poudre sont d'abord mélangés à sec, puis le mélange obtenu est extrudé sous forme de granulés qui servent à la réalisation d'articles tels que tuyaux et gaines.

La demanderesse a trouvé que des compositions thermoplastiques en poudre à base de polyamide et/ou de polyétheresteramide, peuvent être utilisées pour le revêtement de substrats métalliques possèdent de bonnes propriétés de mouillabilité de substrats métalliques et ce, sans primaire d'adhérence.

Les compositions thermoplastiques en poudre mises en oeuvre selon l'invention contiennent un mélange de polyamide et/ou de polyétheresteramide et de résines de condensation de composés sulfonamides aromatiques et d'aldéhydes et/ou d'acides dicarboxyliques.

Le rapport pondéral des résines de condensation au polyamide et/ou polyétheresteramide peut varier de 0,5 à 20 %, et de préférence de 0,5 à 10 %.

Par polyamide entrant dans la composition thermoplastique en poudre mise en oeuvre selon l'invention, on entend les polyamides aliphatiques obtenus à partir de lactames ou d'aminoacides dont la chaîne hydrocarbonée possède un nombre d'atomes de carbone compris entre 4 et 20 comme, par exemple, le caprolactame, l'oenantholactame, le dodécalactame, l'undécanolactame, l'acide amino 11-undécanoïque, l'acide amino 12-dodécanolque, les produits de condensation d'un acide dicarboxylique avec une diamine comme, par exemple, les polyamides 6.6, 6.9, 6.10, 6.12, 9.6, (produits de la condensation de l'hexaméthylène diamine avec l'acide adipique, l'acide, azélaïque, l'acide sébacique, l'acide dodécanedioïque-1,12 et de la nonaméthylène diamine avec l'acide adipique), les copolyamides résultant de la polymérisation des divers monomères cités ci-dessus ou les mélanges de plusieurs polyamides cités ci-dessus.

Parmi ces polyamides on citera tout particulièrement :

- le polyamide 11, obtenu par polycondensation de l'acide amino-11 undécanoïque,
- le polyamide 12, obtenu par polycondensation de l'acide amino-12 dodécanoïque ou du dodécanolactame et,
- les copolyamides obtenus par la polymérisation des monomères cités ci-dessus.

D'une manière générale, la viscosité inhérente (mesurée à 20°C pour une solution à 0,5 g pour 100 g de metacrésol) des polyamides peut être comprise entre 0,20 et 2,0, et de préférence entre 0,60 et 1,30 dlg⁻¹.

Par polyamides, on entend aussi les polyamides amorphes semi-aromatiques, et notamment tels que définis dans les brevets français FR 1 588 130, 2 324 672 et 2 575 756, dans le brevet européen EP 53 876, dans les brevets japonais 59 015 447 et 60 217 237.

Par polyétheresteramides, on entend aussi bien les polyétheresteramides statistiques (c'est-à-dire formés par l'enchaînement aléatoire des divers constituants monomères) que les polyétheresteramides séquencés c'est-à-dire formés de blocs présentant une certaine longueur de chaîne de leurs divers constituants.

Les polyétheresteramides sont des produits de la copolycondensation de séquences polyamides à extrémités réactives avec des séquences polyéthers à extrémités réactives, telles que entre autres :

. séquences polyamides à fins de chaîne dicarboxyliques avec soit des séquences polyétherdiols soit des séquences polyétherdiamines (par cyanoéthylation et hydrogénation du polyétherdiol);
. séquences polyamides à fins de chaîne diamino avec des séquences polyéthers à fins de chaîne carboxyliques.

De tels produits ont été décrits par exemple dans les brevets français n° 74 18913 et 77 26678.

La masse moléculaire moyenne en nombre de ces séquences polyamides est généralement comprise entre 500 et 10 000 et plus particulièrement entre 600 et 5 000. Les séquences polyamides des polyétheresteramides sont formées de préférence de polyamide 6, 6.6, 6.12, 11 ou 12 ou de copolyamides résultant de la polycondensation de leurs monomères.

La masse moléculaire moyenne en nombre des polyéthers est comprise généralement entre 200 et 6 000 et plus particulièrement entre 600 et 3 000.

Les séquences polyéthers consistent de préférence en polytétraméthylène glycol (PTMG), polypropylène glycol (PPG), ou polyéthylène glycol (PEG).

La viscosité inhérente des polyétheresteramides est avantageusement comprise entre 0,8 et 2,05, et de préférence entre 0,80 et 1,20.

La viscosité inhérente est mesurée dans le métacrésol à 25°C avec une concentration initiale de 0,5 g pour 100 g de métacrésol. Elle est exprimée en dlg$^{-1}$.

Les polyétheresteramides mis en oeuvre selon l'invention peuvent être formés de 5 à 85 % en poids de polyéther, et de 95 à 15 % en poids de polyamide, et de préférence de 30 à 80 % en poids de polyéther et de 70 à 20 % en poids de polyamide.

Les résines de condensation entrant dans la composition en poudre mise en oeuvre selon l'invention, peuvent être obtenues par condensation de composés aromatiques sulfonamides et d'aldéhydes et/ou d'acides dicarboxyliques. Le point de fusion des résines de condensation conformes à l'invention peut être compris entre 50 et 180°C, et leur viscosité dynamique à 100°C peut être comprise entre 10 Pa.s et 50 Pa.s.

Les composés aromatiques sulfonamides peuvent être choisis parmi les dérivés monosulfonamides du benzène halogéné ou non, de nitrobenzène, d'o-, m-ou p-toluène, du xylène, du naphtalène substitué ou non, d'éthers méthylés ou éthylés du phénol, du crésol, du résorcinol, du naphtol.

A titre d'exemples d'aldéhydes, on peut citer l'acétaldéhyde, le benzaldéhyde, le furfural, et de préférence le formaldéhyde.

A titre d'exemples d'acides dicarboxyliques, on peut citer l'acide adipique, les acides iso- et téréphtaliques, l'acide undécanedioïque, l'acide oxalique ainsi que les chlorures d'acyles correspondants.

Au mélange décrit ci-dessus, on peut incorporer divers autres constituants tels que des charges, des pigments.

A titre d'exemples de charges qui peuvent entrer dans la composition mise en oeuvre selon l'invention, on peut citer, le talc, les carbonates de calcium et de manganèse, les silicates de potassium et d'aluminium.

A titre d'exemples de pigments, on peut citer le dioxyde de titane, le chromate de strontium, le phosphate de zinc, le silicochromate de plomb, le noir de carbone, les oxydes de fer.

Il est possible d'incorporer au mélange constitué de polyamide et/ou de polyétheresteramide et de résines de polycondensation jusqu'à 100 % en poids de divers constituants choisis parmi ceux décrits ci-dessus et dont les proportions respectives restent dans les limites habituellement rencontrées dans le domaine des compositions en poudre à base de polyamide ou de polyétheresteramide pour le revêtement de substrats métalliques.

La présente invention concerne aussi les compositions thermoplastiques en poudre telles que définies aux revendications 11 et 12.

L'invention a également pour objet plusieurs procédés d'obtention des compositions thermoplastiques en poudre définies plus haut.

Le premier procédé mis au point par la demanderesse consiste :

- à dissoudre la résine de condensation dans un solvant approprié,
- puis à rajouter à la solution ainsi obtenue la poudre de polyamide, et/ou de polyétheresteramide ou plus brièvement de polyamide.
- et enfin à pratiquer le séchage et le tamisage du mélange pour la production d'une composition en poudre à la granulométrie souhaitée.

Toutes ces étapes peuvent être effectuées à température ambiante.

Le solvant dans lequel on dissout la résine de condensation peut être avantageusement l'acétone, l'éthanol, ou tout autre solvant dans lequel la solubilité de la résine est élevée et qui peut s'éliminer facilement selon des techniques connues, habituellement mises en oeuvre.

Le second procédé d'obtention de compositions en poudre selon l'invention consiste en un malaxage à l'état fondu de la résine de condensation avec le polyamide dans un malaxeur de type approprié.

La température de malaxage peut être comprise entre 150 et 300°C, et de préférence entre 170 et 230°C.

Le mélange ainsi obtenu se présente en général sous forme de granulés que l'on broie, selon les techniques habituelles, à la granulométrie souhaitée pour le revêtement de substrats métalliques.

Le troisième procédé mis au point par la demanderesse consiste à mélanger à sec la résine de condensation préalablement broyée finement et la poudre de polyamide. Ce mélange à sec ou dry-blend ne nécessite pas d'appareillage spécial, il peut s'effectuer à température ambiante, il est donc économique, rapide.

Le quatrième procédé d'obtention de compositions en poudre selon l'invention consiste à effectuer une copolycondensation des monomères de polyamide et des monomères constituant la résine de condensation telle que définie plus haut. Une variante de ce procédé consiste à copolycondenser les monomères de polyamide en présence de la résine de condensation (déjà polycondensée).

On opère en général à une température comprise entre 150 et 300°C, et de préférence entre 190 et 250°C.

Tout type d'appareil utilisé pour la polycondensation des polyamides peut être avantageusement employé. A titre d'exemples, on peut citer un réacteur équipé d'une agitation d'environ 50 tours/mn, pouvant supporter une pression de 20 bars.

La durée de la polycondensation peut être comprise entre 5 et 15 heures, et de préférence entre 4 et 8 heures.

Lorsque les opérations de copolycondensation sont terminées, on obtient le mélange sous forme de granulés que l'on broie à la granulométrie souhaitée.

D'une manière générale, la granulométrie des poudres conformes à l'invention est comprise entre 5 μm et 1 mm.

Le substrat métallique peut être choisi dans une large gamme de produits. Il peut s'agir de pièces d'acier ordinaire ou galvanisé, de pièces en aluminium ou en alliages d'aluminium. L'épaisseur du substrat métallique peut être quelconque (par exemple de l'ordre du dixième de mm, comme de l'ordre de quelques dizaines de cm).

Selon une technique connue et qui ne constitue pas en elle-même un objet de l'invention, le substrat métallique, et notamment en acier ordinaire, en aluminium ou en alliage d'aluminium présent dans les matériaux conformes à l'invention a pu subir un ou plusieurs des traitements de surface suivants, cette liste n'étant pas limitative :

- dégraissage grossier
- dégraissage alcalin
- brossage
- dégraissage fin
- rinçage à chaud
- dégraissage phosphatant
- phosphatation fer ou zinc
- chromatation
- rinçage à froid
- rinçage chromique.

A titre d'exemples de substrats métalliques aptes à être revêtus avec une composition selon l'invention, on peut citer :

- Acier dégraissé, lisse ou grenaillé,
- Acier dégraissé, phosphaté,
- Acier phosphaté fer ou zinc,
- Acier galvanisé Sendzimir,
- Acier électrozingué,
- Acier galvanisé au bain,
- Acier cataphorèse,
- Acier chromaté,
- Acier anodisé,
- Acier sablé corindon,
- Aluminium dégraissé,
- Aluminium lisse ou grenaillé,
- Aluminium Alodine 1200.

La composition à base de polyamide ou de polyétheresteramide selon l'invention est donc appliquée sous forme de poudre sur le substrat métallique. L'application de la composition en poudre peut s'effectuer selon les techniques d'application habituellement mises en oeuvre.

Le broyage des poudres peut s'effectuer dans des appareils refroidis cryogéniquement ou à forte absorption d'air (broyeurs à couteaux, à marteaux, à disques). Les particules de poudre obtenues sont sélectées dans des appareils appropriés pour éliminer des tranches granulométriques non souhaitées : par exemples des grains trop gros et/ou trop fins.

Parmi les techniques d'application de poudre, on peut citer la projection électrostatique, le trempage en lit fluidisé, techniques particulièrement préférées pour réaliser le revêtement de substrats métalliques selon l'invention.

En projection électrostatique, la poudre est introduite dans un pistolet où elle est véhiculée par de l'air comprimé et passe dans une buse portée à un potentiel élevé généralement compris entre une dizaine et une centaine de kilovolts.

La tension appliquée peut être de polarité positive ou négative.

Le débit de la poudre dans le pistolet est généralement compris entre 10 et 200 g/mn, et de préférence entre 50 et 120 g/mn.

Lors de son passage dans la buse, la poudre se charge d'une certaine quantité d'électricité, les particules de poudres véhiculées par l'air comprimé viennent s'appliquer sur la surface métallique à revêtir, ladite surface étant elle-même reliée à la terre c'est-à-dire à un potentiel électrique nul. Les particules de poudre sont retenues sur cette surface par leur charge électrostatique et les forces d'attraction électrostatiques sont suffisantes pour que l'objet poudré puisse être non seulement revêtu de poudre mais également déplacé et chauffé dans un four à une température qui provoque la fusion ou la réticulation des poudres de revêtement.

La polarité de la charge électrostatique à laquelle on porte la poudre peut être, comme on le voit ci-dessus, positive ou négative.

En général, on la choisit en fonction de la nature de la poudre que l'on désire appliquer, qui peut donner de bons résultats avec une polarité d'un certain signe et des résultats moins bons, voire nuls quand la polarité est de signe opposé.

En général, la polarité positive donne de meilleurs résultats pour l'application de poudre de polyamide-11 ou -12 par projection électrostatique.

Cependant la demanderesse a remarqué que pour les compositions en poudre selon l'invention à base de polyamide et contenant de la résine de condensation de type sulfonamide/aldéhyde ou acide dicarboxylique, la polarité négative donne de meilleurs résultats, notamment pour l'adhérence et la qualité du revêtement final, que la polarité positive et ce, quelle que soit la quantité de résine de condensation introduite dans la composition.

La projection électrostatique des compositions selon l'invention en polarité négative présente un avantage certain car la majorité des installations industrielles standard pour la projection électrostatique de revêtements en poudre est conçue pour fonctionner en polarité négative. Les compositions selon l'invention peuvent donc être utilisées sur de telles installations sans que l'on ait besoin d'y apporter des modifications notables.

En projection électrostatique, le rapport pondéral préféré de résines de condensation présentes dans le mélange au polyamide et/ou au polyétheresteramide est avantageusement compris entre 1,5 et 7,5 %.

En général on peut utiliser une poudre de granulométrie moyenne comprise entre 5 et 100 µm et de préférence entre 5 et 65 µm.

Les revêtements réalisés avec une quelconque des compositions selon l'invention et mises en oeuvre par projection électrostatique possèdent de bonnes propriétés d'adhérence, et un aspect final de bonne qualité et ce, quelle que soit l'épaisseur dudit revêtement comprise entre 40 et 400 µm.

Tel n'est pas le cas pour les revêtements en poudre à base de polyamide seul qui présentent de nombreux défauts d'aspect pour des faibles et des fortes épaisseurs.

Par faibles épaisseurs, on entend des épaisseurs d'environ 40 µm et par fortes épaisseurs, des épaisseurs de l'ordre de 400 µm.

Pour les épaisseurs faibles, un revêtement de polyamide présente par exemple des piqûres ; pour de fortes épaisseurs, il y a d'importants risques de délaminage du revêtement et des bulles et des taupinières de répulsion apparaissent en grand nombre.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme et l'épaisseur de revêtement désirée. Le substrat ainsi chauffé est ensuite plongé dans une composition de poudre selon l'invention maintenue en suspension par un gaz en circulation dans une cuve à fond poreux. La poudre fond au contact des surfaces métalliques chaudes et forme ainsi un dépôt dont l'épaisseur est fonction de la température du substrat et de sa durée d'immersion dans la poudre.

En trempage en lit fluidisé, la proportion préférée de résine de condensation par rapport au poids de polyamide et/ou de polyétheresteramide est avantageusement comprise entre 0,5 et 3 %. La demanderesse a d'autre part remarqué que la présence de résine de condensation dans le mélange améliorait de façon non négligeable la fluidisation dudit mélange dans les cuves de trempage.

La granulométrie des poudres mises en oeuvre en lit fluidisé peut être comprise entre 10 et 1 000 µm et de préférence, entre 80 et 200 µm.

En général, l'épaisseur du revêtement peut être comprise entre 150 et 1000 µm, et de préférence entre 200 et 700 µm.

Les exemples suivants illustrent l'invention sans toutefois la limiter.

EXEMPLE 1

A - PREPARATION DE LA COMPOSITION DE POUDRE :

Dans 100 parties en poids d'acétone, on dissout 5 parties de résine de condensation de toluène sulfonamide et d'aldéhyde dont le point de fusion est égal à 62°C et la viscosité dynamique à 100°C égale à 10 Pa.s. On ajoute ensuite 200 parties de poudre de polyamide-11 de viscosité inhérente égale à 0,90 et contenant 13 % en poids d'additifs divers dont 9,6 % de charge, 1,8 % de colorants et 1,6 % d'agents antioxydant, anti-cratère et réducteur. On agite le mélange en continu pendant 4 mn à température ambiante. On obtient une pâte épaisse que l'on sèche dans un four pendant 6 heures à 45°C afin d'éliminer l'acétone.

Le résidu sec est pulvérisé et tamisé à travers un tamis de maille 100 µm afin d'éliminer les grosses particules ne correspondant pas à la tranche granulométrique électrostatique.

B - MISE EN OEUVRE :

La composition en poudre obtenue en A est déposée à température ambiante sur une plaque d'acier qui a préalablement subi un traitement de phosphatation au zinc par projection électrostatique sous charge électrostatique négative de 30 kV, la surface métallique étant à potentiel 0.

Le substrat ainsi revêtu passe dans un four maintenu à 220 ± 20°C où il séjourne de 5 à 15 minutes, puis est retiré du four et refroidi à l'air.

C - CARACTERISTIQUES DU MATERIAU

1°) Le matériau est un composite comprenant successivement :

- la plaque d'acier phosphaté zinc (épaisseur 1,5 mm)
- une couche de composition en poudre telle que décrite sous A dépaisseur 95 µm.

2°) Le matériau décrit en C.1°) subit le test d'adhérence suivant, mis au point par la demanderesse :

- Avec un outil tranchant, on creuse dans le revêtement et jusqu'au métal 2 sillons parallèles distants de 10 mm. On creuse ensuite un autre sillon, perpendiculaire aux 2 premiers et les recoupant.
- Avec le même outil dont la largeur de coupe est de 10 mm, on pénètre dans le dernier sillon et on progresse entre les 2 sillons parallèles au niveau de l'interface métal/revêtement pour obtenir une languette de revêtement 10 mm.

On tire sur la languette pour essayer de séparer le revêtement du métal.
Les résultats sont classés de la façon suivante :

- classe 4 : le film ne peut être séparé du métal,
- classe 3 : le film se sépare irrégulièrement, la liaison est totale sur au moins 50 % de la surface,
- classe 2 : le film se sépare régulièrement, la force nécessaire à l'arrachement est élevée et se situe à la limite de la résistance du revêtement,
- classe 1 : le film se sépare de la surface avec facilité, la liaison est faible,
- classe 0 : le revêtement ne présente aucune liaison avec la surface.

Les résultats obtenus par le matériau décrit en C.1°) sont répertoriés dans le Tableau I.

EXEMPLE 2

On renouvelle l'essai de l'exemple 1 en utilisant un mélange comprenant (en poids) :

- 100 parties d'acétone,
- 5 parties de résine de condensation de toluène sulfonamide et de formaldéhyde de même caractéristiques que celles décrites dans l'exemple 1.A.
- 200 parties de poudre de polyamide-12 de viscosité inhérente 0,95.

On réalise ainsi un matériau composite comprenant successivement :

- la plaque d'acier phosphaté zinc d'épaisseur 1,5 mm,
- une couche de polyamide-12 d'épaisseur 100 μm.

Le matériau décrit ci-dessus subit un test d'adhérence tel que défini en 1.C.2°).
Les résultats sont répertoriés dans le Tableau I.

EXEMPLE 3

A - PREPARATION DE LA COMPOSITION EN POUDRE

On ajoute 25 parties en poids de résine de condensation de toluène sulfonamide et de formaldéhyde de caractéristiques identiques à celles de l'exemple 1.A. préalablement broyés à une granulométrie moyenne comprise entre 30 et 40μm à 1 000 parties de PA-11 de viscosité inhérente 0,90 et contenant 0,7 % en poids d'agents anti-cratère et anti-oxydant.

L'ensemble est malaxé et homogénéisé à une température comprise entre 200 et 220°C. Le temps de séjour dans l'appareil de malaxage est de l'ordre de 45 s.

Le produit obtenu, une fois refroidi à l'air ambiant, est broyé afin d'obtenir une granulométrie de poudre comprise entre 10 et 65 μm.

B - MISE EN OEUVRE

La composition de poudre obtenue sous A est projetée électrostatiquement sur une plaque d'acier dégraissé phosphaté dans les mêmes conditions que celles décrites dans l'exemple 1.B.

C - CARACTERISTIQUES DU MATERIAU

1°) Le matériau est un composite comprenant successivement :

- une plaque d'acier dégraissé phosphaté (épaisseur 1,5 mm),
- une couche de composition en poudre telle que décrite sous A d'épaisseur 100 μm.

2°) Le matériau décrit en C.1°) subit un test d'adhérence tel que défini dans l'exemple 1.C.2°).

Les résultats obtenus par le matériau décrit en C.1°) sont répertoriés dans le Tableau I.

EXEMPLE 4

A - PREPARATION DE LA COMPOSITION EN POUDRE

On broie 20 parties en poids de résine de condensation toluène sulfonamide/formaldéhyde de mêmes caractéristiques que celles décrites sous 1.A à une granulométrie comprise entre 100 et 1000 μm avant de les ajouter à 1 000 parties en poids d'amino-11 undécanoïque, 10 parties en poids d'acide hypophosphoreux pur et 100 parties de charge.

L'ensemble est placé dans un réacteur sous courant d'azote et agité. On porte l'ensemble à une température de 190°C sous une pression de 10 bars.

La température et la pression sont maintenues constantes jusqu'à ce que la masse visqueuse ait un degré de polymérisation DP égal à 70.

Au bout de 8 heures, on extrude le produit et on le broie à une granulométrie comprise entre 5 et 65 μm.

B - MISE EN OEUVRE

La composition de poudre obtenue sous A est projetée électrostatiquement sur une plaque d'acier dégraissé lisse dans les mêmes conditions que celles décrites dans l'exemple 1.B.

C - CARACTERISTIQUES DU MATERIAU

1°) Le matériau est un composite comprenant successivement :

- une plaque d'acier dégraissé lisse (épaisseur 1,5 mm),
- une couche de composition en poudre telle que décrite sous A d'épaisseur 100 $\mu$m.

EXEMPLE 5

A - PREPARATION DE LA COMPOSITION EN POUDRE

Dans un mélangeur rapide de type HENSCHEL de contenance 70 1, on charge 20 kg de poudre de PA-11, 0,30 kg de résine de condensation toluène sulfonamide/formaldéhyde broyée à une granulométrie moyenne de 13 $\mu$m et 0,02 kg d'agent de fluidisation.

Le PA-11 utilisé a une viscosité inhérente de 0,90 et il contient 13 % en poids d'additifs dont 9,6 % de charge, 1,8 % de colorants et 1,6 % d'agents antioxydant, anti-cratère et réducteur.

La résine de condensation a un point de fusion égal à 62°C et sa viscosité dynamique à 100°C est égale à 10 Pa.s.

On brasse le mélange pendant 100 s à une vitesse de 830 trs/mn. La poudre obtenue peut être mise en oeuvre telle quelle.

B - MISE EN OEUVRE

La composition de poudre obtenue sous A est projetée électrostatiquement sur une plaque d'acier dégraissé lisse dans les mêmes conditions que celles décrites dans l'exemple 1.B.

C - CARACTERISTIQUES DU MATERIAU

1°) Le matériau est un composite comprenant successivement :

- la plaque d'acier dégraissé lisse (épaisseur 1,5 mm),
- une couche de composition en poudre telle que décrite sous A d'épaisseur 90 $\mu$m.

2°) Le matériau décrit en C.1°) subit un test d'adhérence tel que défini dans l'exemple 1.C.2°).

Les résultats obtenus par le matériau décrit en C.1°) sont répertoriés dans le Tableau I.

EXEMPLE 6 (COMPARATIF)

1°) On projette électrostatiquement sur une plaque d'acier dégraissé lisse dans les mêmes conditions que celles de l'exemple 1.B une poudre de PA-11 de mêmes caractéristiques que celles décrites dans l'exemple 5.A et de granulométrie moyenne de 35 $\mu$m.

2°) Le matériau obtenu est un composite comprenant successivement :

- la plaque d'acier dégraissé lisse (épaisseur 1,5 mm),
- une couche de poudre de PA-11 d'épaisseur 100 $\mu$m.

3°) Le matériau décrit en 2°) subit un test d'adhérence tel que défini dans l'exemple 1.C.2°).

Les résultats obtenus sont réunis dans le Tableau I.

EXEMPLE 7 (COMPARATIF)

1°) On projette électrostatiquement sur une plaque d'acier dégraissé lisse dans les mêmes conditions que celles de l'exemple 1.B, une composition en poudre à base de PA-11 de caractéristiques identiques à celles décrites dans l'exemple 5.A et contenant 13,5 % en poids de résines phénoliques bloquées.

2°) Le matériau obtenu est un composite comprenant successivement :

- une plaque d'acier dégraissé lisse (épaisseur 1,5 mm),
- une couche de composition de poudre telle que défini en 1°) d'épaisseur 100 μm.

3°) Le matériau décrit en 2°) subit un test d'adhérence tel que défini dans l'exemple 1.C.2°).

Les résultats d'adhérence sont réunis dans le Tableau I.

EXEMPLE 8

On renouvelle l'essai de l'exemple 5 dans les mêmes conditions en utilisant de la poudre de PA-11 de mêmes caractéristiques mais contenant des additifs différents.

A - La poudre utilisée contient :

- 99,25 % en poids de PA-11
- 0,75 % d'additifs (agents antioxydant, agent anti-cratère et agent de fluidisation).

B - La poudre utilisée, colorée en blanc, contient 68,8 % en poids de PA-11, 29,5 % de charges et 1,7 % d'additifs (agent antioxydant et agent anti-cratère).

C - La poudre utilisée, colorée en noir, contient 58,5 % en poids de PA-11, 39 % de charges, 0,5 % de colorant noir, 2 % d'additifs (agent antioxydant, agent anti-cratère, agent collant).

D - La poudre utilisée, colorée en gris, contient 85,3 % en poids de PA-11, 13,4 % de charges, 0,02 % de colorants et 1,28 % d'additifs (agent antioxydant, agent anti-cratère).

E - La poudre utilisée, colorée en jaune contient 67,4 % en poids de PA-11, 28,9 % de charges, 1,7 % de colorants et 2 % d'additifs (agent antioxydant, agent anti-cratère, agent réducteur).

F - La poudre utilisée, colorée en beige, contient 83,8 % en poids de PA-11, 9,3 % de charges, 5,7 % de colorants et 1,2 % d'additifs (agent antioxydant et agent anti-cratère).

Les résultats obtenus pour les essais A à F sont réunis dans le Tableau II.

EXEMPLE 9

On renouvelle l'essai de l'exemple 5 dans des conditions opératoires identiques en utilisant de la poudre de PA-11 colorée en gris, contenant 13 % en poids d'additifs dont charges (9,6 %), colorants (1,8 %), agent antioxydant + agent anti-cratère + agent réducteur (1,6 %) (ECHANTILLON A).

On renouvelle l'essai décrit au-dessus mais avec des compositions de poudre contenant respectivement 0,1 kg de résine de condensation (ECHANTILLON B), 0,3 kg (ECHANTILLON C), 0,9 kg (ECHANTILLON D) et 1,5 kg (ECHANTILLON E) de mêmes caractéristiques qu'en 5.A.

On mesure l'adhérence des matériaux composites obtenus après 15 jours de stockage à l'air ambiant à 25°C.

Les résultats obtenus sont réunis dans le Tableau III.

EXEMPLE 10

A - On utilise de la composition en poudre telle que préparée dans l'exemple 5 que l'on projette électrostatiquement au moyen d'un pistolet à faible débit (10 g/mn) sur une éprouvette métallique de dimensions 200 X 200 X 1 mm située à environ 15 cm de la buse du pistolet. On mesure l'épaisseur limite du revêtement en deçà de laquelle des défauts apparaissent.

B - A titre de comparaison, on applique dans les mêmes conditions que celles décrites en A une composition en poudre à base de PA-11 de viscosité inhérente 0,90 et contenant 13,5 % en poids de résines phénoliques bloquées. On mesure l'épaisseur limite du revêtement en deçà de laquelle des défauts apparaissent, en particulier des piqûres.

Les résultats obtenus sont réunis dans le Tableau IV.

EXEMPLE 11

A - On utilise de la composition en poudre telle que préparée dans l'exemple 5 que l'on projette électrostatiquement au moyen d'un pistolet à fort débit (120g/mn) sur une éprouvette métallique de dimensions 200 X 200 X 1 mm située à environ 15 cm de la buse du pistolet.

On mesure l'épaisseur limite du revêtement au-delà de laquelle apparaissent des défauts (bulles, taupinières de répulsion).

B - A titre de comparaison, on applique dans les mêmes conditions que celles décrites en A, une composition en poudre à base de PA-11 de viscosité inhérente 0,90 et contenant 13,5 % poids de résines phénoliques bloquées. On mesure l'épaisseur limite du revêtement au-delà de laquelle apparaissent des défauts.

Les résultas obtenus sont réunis dans le Tableau IV.

EXEMPLE 12

A - La composition de poudre obtenue dans l'exemple 9 (ECHANTILLON C) est appliquée électrostatiquement sur divers substrats métalliques dans des conditions opératoires identiques à celles décrites dans l'exemple 1.B.

B - A titre de comparaison, on applique électrostatiquement et dans les mêmes conditions de la poudre de PA-11 de viscosité inhérente 0,90.

C - A titre de comparaison, on applique électrostatiquement et dans les mêmes conditions une composition en poudre à base de PA-11 de viscosité inhérente 0,90 et contenant 13,5 % en poids de résines phénoliques bloquées.

Les résultats des essais pour A, B et C sont réunis dans le Tableau V.

EXEMPLE 13 Test de décrochement avant fusion

On tare une éprouvette métallique de dimensions 200 X 200 X 1 mm avant de la revêtir d'un seul côté de poudre par projection électrostatique. On pèse ensuite l'éprouvette ainsi revêtue et on accède au poids de poudre déposée.

On place l'éprouvette perpendiculairement à un support et on la maintient solidement à 285 mm d'un maillet de masse 50 g qui pend à l'extrémité d'une tige de 265 mm située à 20 mm de la plaque. 5 minutes après le poudrage, l'éprouvette est soumise au choc du maillet qui décrit un arc de cercle de 45° et vient frapper l'éprouvette en son centre, du côté non revêtu.

On pèse la poudre décrochée après le choc.

On calcule alors le pourcentage de perte, au décrochement qui est égal à :

$$\text{Perte de Poids} = \frac{\text{poids de poudre décrochée}}{\text{poids de poudre déposée}} \times 100$$

On pratique le test de décrochement ci-dessus avec une poudre de PA-11 de viscosité inhérente 0,90 contenant 13 % en poids d'additif dont 9,6 % de charge, 1,8 % de colorants et 1,6 % d'agents antioxydant, anti-cratère et réducteur (ECHANTILLON A).

On pratique le même test de décrochement avec un mélange de poudre de PA-11 de mêmes caractéristiques qu'en A contenant 13,5 % en poids de résines phénoliques bloquées (ECHANTILLON B).

On pratique le même test de décrochement avec un mélange de poudre de PA-11 contenant 1,5 % en poids de résine de condensation toluène sulfonamide/formaldéhyde de point de fusion égal à 62°C et de viscosité dynamique à 100°C égale à 10 Pa.s. (ECHANTILLON C).

Les résultats des ECHANTILLONS A, B et C sont réunis dans le Tableau suivant :

| ECHANTILLON | Perte de Poids (%) |
|---|---|
| A | 13 |
| B | 13,5 |
| C | 1,5 |

EXEMPLE 14

Dans une cuve de trempage en lit fluidisé, on place de la poudre de granulométrie moyenne comprise entre 80 et 200 µm.

Cette poudre est mise en fluidisation par arrivée de gaz comprimé sous la dalle poreuse de la cuve.

Le substrat d'acier grenaillé à revêtir est préchauffé dans un four ventilé jusqu'à ce qu'il atteigne une température d'environ 240-260°C.

On plonge le substrat dans le bain de poudre fluidisée pendant 4 à 6 s puis on le retire et le laisse refroidir à température ambiante.

On utilise de la poudre de PA-11, PA-11 coloré en blanc et PA-12 (respectivement ECHANTILLON A, B et C) contenant des quantités variables de résine de condensation toluène sulfonamide/aldéhyde de point de fusion égal à 62°C et de viscosité dynamique à 100°C égale à 10 Pa.s.

On mesure l'adhérence des revêtements réalisés après 15 jours à l'air ambiant selon le test décrit dans l'exemple 1.C.2°).

Les résultats obtenus sont dans le Tableau VI.

EXEMPLE 15

Dans une cuve de fluidisation de dimensions 500 X 500 X 700 mm en acier inoxydable dont la dalle poreuse est en bronze fritté on verse 40 kg de poudre. On met la poudre en fluidisation maximum pendant 1 mn au moyen d'un débitmètre à air gradué en $m^3/h$ et dont la plage de débit varie de 3 à 30 $m^3/h$.

On arrête la fluidisation lentement jusqu'à la valeur 0 et on mesure la hauteur de poudre au repos. On règle alors cette hauteur à 350 mm par addition ou retrait de poudre.

On remet ensuite la poudre en fluidisation maximum jusqu'à la zone de gros bouillonnements.

On diminue le débit d'air jusqu'à ce qu'il atteigne 28 $m^3/h$, on laisse la poudre se stabiliser et on note la pression sur un manomètre à eau formé d'un tube en U et gradué en mm d'eau.

On effectue les mêmes mesures en diminuant à chaque fois le débit de 2 $m^3/h$ en 2 $m^3/h$ jusqu'à 20 $m^3/h$ puis de 1 $m^3/h$ en 1 $m^3/h$.

On peut alors tracer les courbes de pression de fluidisation en fonction du débit d'air et déterminer la zone permettant le trempage, qui correspond à un bouillonnement modéré sur toute la surface.

Lorsqu'on applique la méthode précédente à une poudre de PA-11 qui ne contient pas de résine de condensation selon l'invention, la zone de trempage est comprise entre 18 et 21 $m^3/h$ d'air ; alors que pour une poudre de PA-11 qui contient de la résine de condensation selon l'invention, la zone de trempage est abaissée et est comprise entre 9 et 12 $m^3/h$ d'air.

TABLEAU I

| EX | Adhérence | $\dfrac{\text{Résine de condensation}}{\text{PA + additifs (\% en poids)}}$ | préparation de la poudre | type d'application |
|----|-----------|----------------------------------------|--------------------------|--------------------|
| 1 | Classe 3 | 2,5 | dissolution | ES(-) |
| 2 | Classe 3 | 2,5 | dissolution | ES(-) |
| 3 | Classe 3 | 2,5 " | malaxage à l'état fondu | ES(-) |
| 5 | Classe 3 | 1,5 | mélange à sec | ES(-) |
| 6 | Classe 0 | 0 | | ES(-) |
| 7 | Classe 2 | 0 mais contient 13,5 % en poids de résines phénoliques bloquées | mélange à sec | ES(-) |
| ES = projection électrostatique (+) (-) | | | | |

TABLEAU II

| EX | Adhérence | % en poids d'additifs | $\dfrac{\text{Résines de condensation}}{\text{PA-11 + additifs (\% en poids)}}$ | application |
|-----|-----------|-----------------------|----------------------------------------|-------------|
| 8.A | Classe 2 | 0,75 | 1,5 | ES(-) |
| 8.B | Classe 3 | 31,2 | 1,5 | ES(-) |
| 8.C | Classe 3 | 41,5 | 1,5 | ES(-) |
| 8.D | Classe 2 | 14,7 | 1,5 | ES(-) |

TABLEAU II   (suite)

| EX | Adhérence | % en poids d'additifs | $\frac{\text{Résines de condensation}}{\text{PA-11 + additifs (\% en poids)}}$ | application |
|---|---|---|---|---|
| 8.E | Classe 3 | 32,6 | 1,5 | ES(-) |
| 8.F | Classe 3 | 16,2 | 1,5 | ES(-) |

TABLEAU III

| EX | Adhérence après 15 jours de stockage à l'air ambiant | $\frac{\text{résine de condensation}}{\text{PA + additifs (\% en poids)}}$ | application |
|---|---|---|---|
| 9.A | Classe 1 | 0 | ES(-) |
| 9.B | Classe 2 | 0,5 | ES(-) |
| 9.C | Classe 3 | 1,5 | ES(-) |
| 9.D | Classe 4 | 3,5 | ES(-) |
| 9.E | Classe 3 | 7,5 | ES(-) |

TABLEAU IV

| | EPAISSEUR DES REVETEMENTS | |
|---|---|---|
| | Limite inférieure | Limite supérieure |
| PA -11 + 1,5 Z de résine de condensation | EX 10.A 40 µm | EX 11.A 350 µm |
| PA -11 + 13,5 Z de résines phénoliques bloquées | 10.B 70 µm | 11.B 110 µm |

TABLEAU V

| Substrat | Adhérence | | |
|---|---|---|---|
| | EX 12.A | EX 12.B | EX 12.C |
| acier dégraissé $F_2C = CHF$ | Classe 2 | Classe 0 | Classe 2 |
| acier dégraissé grenaillé | Classe 4 | Classe 1 | Classe 2 |
| acier dégraissé phosphaté | Classe 3 | Classe 0 | Classe 1 |
| acier phosphaté fer | Classe 3 | Classe 0 | Classe 1 |
| acier phosphaté zinc | Classe 3 | Classe 0 | Classe 1 |
| aluminium dégraissé | Classe 4 | Classe 0 | Classe 1 |

TABLEAU VI

| $\frac{\text{résine de condensation}}{\text{PA + additifs (\% en poids)}}$ | Adhérence EX 14.A PA-11 | Adhérence EX 14.B PA-11 blanc | Adhérence EX 14.C PA-12 |
|---|---|---|---|
| 0 | Classe 1 | Classe 1 | Classe 2 |
| 0,5 | Classe 3 | Classe 4 | Classe 3 |
| 1,5 | Classe 3 | Classe 3 | Classe 4 |

**Revendications**

1. Utilisation d'une composition thermoplastique en poudre à base de polyamide et/ou de polyétheresteramide, contenant des résines de condensation de sulfonamides aromatiques et d'aldéhydes ou d'acides dicarboxyliques pour le revêtement de substrats métalliques selon une technique d'application de type poudre.

2. Utilisation d'une composition selon la revendication 1, caractérisée en ce qu'elle présente une granulométrie comprise entre 5 μm et 1 mm.

3. Utilisation d'une composition selon l'une quelconque des revendications 1 ou 2 caractérisée en ce que le rapport pondéral des résines de condensation au polyamide et/ou au polyétheresteramide est compris entre 0,5 et 20 % et de préférence entre 0,5 et 10 %.

4. Utilisation d'une composition selon l'une quelconque des revendication 1 à 3 caractérisée en ce qu'elle est à base de polyamide-11.

5. Utilisation d'une composition selon l'une quelconque des revendications 1 à 3 caractérisée en ce qu'elle est à base de polyamide-12.

6. Utilisation d'une composition selon l'une quelconque des revendications 1 à 5 dont le rapport pondéral des résines de condensation au polyamide et/ou au polyétheresteramide est compris entre 1,5 et 7,5 % pour le revêtement de substrats métalliques par projection électrostatique.

7. Utilisation d'une composition selon l'une quelconque des revendications 1 à 5 dont le rapport pondéral des résines de condensation au polyamide et/ou au polyétheresteramide est compris entre 0,5 et 3 %, pour le revêtement des substrats métalliques par trempage en lit fluidisé.

8. Procédé de préparation d'une composition telle que décrite à la revendication 11, caractérisé en ce qu'il comprend les étapes suivantes:

   - on dissout les résines de condensation dans un solvant approprié,
   - puis on ajoute la poudre de polyamide et/ou de polyétheresteramide,
   - on évapore ensuite le solvant et on tamise ou broie le mélange obtenu à la granulométrie souhaitée.

9. Procédé de préparation d'une composition telle que décrite à la revendication 11, caractérisé en ce que les constituants de la composition sont malaxés à l'état fondu puis broyés à la granulométrie souhaitée.

10. Procédé de préparation d'une composition telle que décrite à la revendication 11, caractérisé en ce qu'il consiste à effectuer simultanément la polymérisation des monomères de polyamide et/ou de polyétheresteramide et éventuellement la copolycondensation des résines de condensation.

11. Composition thermoplastique en poudre à base de PA-11 et/ou PA-12 caractérisée en ce qu'elle contient des résines de condensation de sulfonamides aromatiques et d'aldéhydes ou d'acides dicarboxyliques, qu'elle présente une granulométrie comprise entre 5 μm et 1 mm, et en ce que le rapport pondéral des résines de condensation au polyamide est compris entre 0,5 et 20 %.

12. Composition selon la revendication 11, caractérisée en ce que le rapport pondéral des résines de condensation au polyamide est compris entre 0,5 et 10 %.

**Patentansprüche**

1. Verwendung einer thermoplastischen Zusammensetzung in Pulverform auf Basis von Polyamid und/oder Polyesteramid, enthaltend Harze aus der Kondensation von aromatischen Sulfonamiden und Aldehyden oder Dicarbonsäuren zur Beschichtung von Metallsubstraten gemäß einer Anwendungstechnik vorn Pulvertyp.

2. Verwendung einer Zusammensetzung nach Anspruch 1, dadurch gekennzeichnet, daß sie eine Teilchengröße zwischen 5 um und 1 mm aufweist.

3. Verwendung einer Zusammensetzung nach Anspruch 1 oder 2, dadurch gekennzeichnet, daß das Gewichtsverhältnis der Harze aus der Kondensation zu Polyamid und/oder Polyetheresteramid zwischen 0,5 und 20 %, vorzugsweise zwischen 0,5 und 10 %, liegt.

4. Verwendung einer Zusammensetzung nach einem der Ansprüche 1 bis 3, dadurch gekennzeichnet, daß sie auf Basis von Polyamid-11 vorliegt.

5. Verwendung einer Zusammensetzung nach einem der Ansprüche 1 bis 3, dadurch gekennzeichnet, daß sie auf Basis von Polyamid-12 vorliegt.

6. Verwendung einer Zusammensetzung nach einem der Ansprüche 1 bis 5, wobei das Gewichtsverhältnis der Kondensationsharze zu Polyamid und/oder Polyetheresteramid zwischen 1,5 und 7,5 % liegt, bezogen auf die Beschichtung von Metallsubstraten mittels elektrostatischem Spritzen.

7. Verwendung einer Zusammensetzung nach einem der Ansprüche 1 bis 5, wobei das Gewichtsverhältnis der Harze aus der Kondensation zu Polyamid und/oder Polyetheresteramid zwischen 0,5 und 3 % liegt, bezogen auf die Beschichtung der Metallsubstrate mittels Eintauchbeschichtung in einem Fluidisierbett.

8. Verfahren zur Herstellung einer Zusammensetzung nach Anspruch 11, dadurch gekennzeichnet, daß es die folgenden Verfahrensschritte umfaßt:

   - Man löst die Kondensationsharze in einem geeigneten Lösungsmittel;
   - dann gibt man das Polyamid- und/oder Polyetheresteramidpulver hinzu;
   - anschließend verdampft man das Lösungsmittel und siebt oder zerkleinert die erhaltene Mischung auf die gewünschte Teilchengröße.

9. Verfahren zur Herstellung einer Zusammensetzung nach Anspruch 11, dadurch gekennzeichnet, daß die Bestandteile der Zusammensetzung im geschmolzenen Zustand verknetet und anschließend auf die gewünschte Granulometrie zerkleinert werden.

10. Verfahren zur Herstellung einer Zusammensetzung nach Anspruch 11, dadurch gekennzeichnet, daß man gleichzeitig die Polyamid- und/oder Polyetheresteramidmonomere polymerisiert und gegebenenfalls die Kondensationsharze copolykondensiert.

11. Thermoplastische Zusammensetzung in Pulverform auf Basis von PA-11 und/oder PA-12, dadurch gekennzeichnet, daß sie Kondensationsharze von aromatischen Sulfonamiden und Aldehyden oder Dicarbonsäuren enthält, daß sie eine Granulometrie zwischen 5 μm und 1 mm aufweist und daß das Gewichtsverhältnis der Kondensationsharze zu Polyamid zwischen 0,5 und 20 % liegt.

12. Zusammensetzung nach Anspruch 11, dadurch gekennzeichnet, daß das Gewichtsverhältnis der Kondensationsharze zu dem Polyamid zwischen 0,5 und 10 % liegt.

## Claims

1. Use of a thermoplastic polyamide- and/or polyetheresteramide-based powder composition containing resins from the condensation of aromatic sulphonamides and of aldehydes or of dicarboxylic acids, for the coating of metal substrates using a powder-type application technique.

2. Use of a composition according to Claim 1, characterized in that it has a particle size of between 5 μm and 1 mm.

3. Use of a composition according to either of Claims 1 and 2, characterized in that the weight ratio of the condensation resins to the polyamide and/or to the polyetheresteramide is between 0.5 and 20% and preferably between 0.5 and 10%.

4. Use of a composition according to any one of Claim 1 to 3, characterized in that it is based on nylon-11.

5. Use of a composition according to any one of Claims 1 to 3, characterized in that it is based on nylon-12.

6. Use of a composition according to any one of Claims 1 to 5, of which the weight ratio of the condensation resins to the polyamide and/or to the polyetheresteramide is between 1.5 and 7.5%, for the coating of metal substrates by electrostatic spraying.

7. Use of a composition according to any one of Claims 1 to 5, of which the weight ratio of the condensation resins to the polyamide and/or to the polyetheresteramide is between 0.5 and 3%, for the coating of metal substrates by dipping into a fluidized bed.

8. Process for producing a composition as described in Claim 11, characterized in that it comprises the following steps:

- the condensation resins are dissolved in a suitable solvent,
- the polyamide and/or polyetheresteramide powder is then added,
- the solvent is then evaporated and the mixture obtained is screened or ground to the desired particle size.

9. Process for producing a composition as described in Claim 11, characterized in that the constituents of the composition are mixed in the molten state and then ground to the desired particle size.

10. Process for producing a composition as described in Claim 11, characterized in that it consists in carrying out simultaneously the polymerization of the polyamide and/or polyetheresteramide monomers and optionally the copolycondensation of the condensation resins.

11. Thermoplastic PA-11- and/or PA-12-based powder composition, characterized in that it contains resins from the condensation of aromatic sulphonamides and of aldehydes or of dicarboxylic acids, in that it has a particle size of between 5 $\mu$m and 1 mm and in that the weight ratio of the condensation resins to the polyamide is between 0.5 and 20%.

12. Composition according to Claim 11, characterized in that the weight ratio of the condensation resins to the polyamide is between 0.5 and 10%.